# EUROPÄISCHE PATENTANMELDUNG

(11) **EP 4 357 119 A1**
(43) Veröffentlichungstag der Anmeldung: **24.04.2024**
(21) Anmeldenummer: 23201947.1
(22) Anmeldetag: 05.10.2023
(51) Int. Cl.: B29D 30/00, B29D 30/14, B29D 30/28, B29D 30/16, B29D 30/30

(54) **VERFAHREN ZUM ERMITTELN VON REIFENAUFBAUFEHLERN**

(30) Priorität: 19.10.2022 DE 102022211056
(71) Anmelder: Continental Reifen Deutschland GmbH, 30175 Hannover (DE)
(72) Erfinder: Greupner, Bernd, 30165 Hannover (DE); Koch, Tim, 30165 Hannover (DE)
(74) Vertreter: Continental Corporation

(57) **Zusammenfassung**

Die Erfindung betrifft ein Verfahren zum Ermitteln von Reifenaufbaufehlern an einer Reifenbaumaschine, wobei mit der Reifenbaumaschine Reifenkomponenten aufgespult und beziehungsweise oder aufgelegt werden, wobei die aufgespulten und beziehungsweise oder aufgelegten Reifenkomponenten mit einem Anroller einer Anrollvorrichtung angerollt werden, wobei die radiale und beziehungsweise oder axiale Position des Anrollers mit einem Sensor bestimmt wird und mit Referenzwerten verglichen wird, wobei beim Überschreiten einer Differenz zwischen den bestimmten Werten und den Referenzwerten ein Signal ausgegeben wird. Ferner betrifft die Erfindung eine Reifenbaumschine mit einer Reifenbautrommel und die Verwendung einer Recheneinheit und eines Sensor an Anrollern an einer Reifenbaumaschine.

## Beschreibung

Die Erfindung betrifft ein Verfahren zum Ermitteln von Reifenaufbaufehlern an einer Reifenbaumaschine, wobei mit der Reifenbaumaschine Reifenkomponenten aufgespult und beziehungsweise oder aufgelegt werden, wobei die aufgespulten und beziehungsweise oder aufgelegten Reifenkomponenten mit einem Anroller einer Anrollvorrichtung angerollt werden, wobei die radiale und beziehungsweise oder axiale Position des Anrollers mit einem Sensor bestimmt wird und mit einer Referenzposition verglichen wird. Weiterhin betrifft die Erfindung eine Reifenbaumaschine sowie die Verwendung einer Recheneinheit und zumindest eines Sensor an Anrollern an einer Reifenbaumaschine.

Reifenbaumaschinen werden hinsichtlich ihrer geometrischen Eigenschaften manuell oder aber mit optischen Sensoren, die jeweils die Geometrie einzelner Maschinenkomponenten oder Reifenkomponenten überwachen, überwacht. Dies erfordert einen hohen personellen Einsatz oder aber eine Vielzahl an optischen Sensoren, die die Geometrien der einzelnen Komponenten erfassen. Ein Umrüsten der Maschinen macht ein erneutes Einrichten der optischen Sensoren notwendig.

Ein Verfahren und eine Vorrichtung zum Steuern der Herstellung von Reifenkomponenten ist aus der EP 1 827 805 B1 bekannt, in dem ein Andrückelement ein langestrecktes Element auf einem Formgabeträger verteilt, wobei die Verschiebung des Andrückelements erfasst wird und beim Überschreiten eines Schwellenwerts ein Warnsignal ausgegeben wird.

Vor diesem Hintergrund liegt der Erfindung die Aufgabe zugrunde, ein Verfahren zum Ermitteln von Reifenaufbaufehlern sowie eine Reifenbaumaschine derart auszuführen, dass Reifenbaufehler an einer Reifenbaumaschine kosteneffizient in der Erstellung sowie im Betrieb des Verfahrens, zuverlässig und zeitnah erkannt werden.

Diese Aufgabe wird gelöst mit einem Verfahren gemäß den Merkmalen des Patentanspruches 1 sowie einer Vorrichtung sowie einer Verwendung gemäß den nebengeordneten Ansprüchen. Die Unteransprüche betreffen besonders zweckmäßige Weiterbildungen der Erfindung.

Erfindungsgemäß ist also ein Verfahren zum Ermitteln von Reifenaufbaufehlern an einer Reifenbaumaschine vorgesehen, wobei mit der Reifenbaumaschine Reifenkomponenten aufgespult und beziehungsweise oder aufgelegt werden. Die aufgespulten und beziehungsweise oder aufgelegten Reifenkomponenten werden mit einem Anroller einer Anrollvorrichtung angerollt, wobei die radiale und beziehungsweise oder axiale Position des Anrollers mit einem Sensor bestimmt wird, wobei aus den bestimmten radialen und beziehungsweise oder axialen Position des Anrollers Sensorwerte und beziehungsweise oder verarbeitete Sensorwerte erzeugt werden und mit Referenzwerten verglichen werden. Beim Überschreiten einer Differenz zwischen den Sensorwerten und beziehungsweise oder verarbeiteten Sensorwerten und den Referenzwerten wird ein Signal ausgegeben.

Reifenbaufehler können somit in einfacher Weise direkt an der Reifenbaumaschine detektiert werden. Die fehlerbehafteten Reifen können direkt einem Recycling zugeführt werden, ohne dass weitere Herstell- und Lagerkosten für den fehlerbehafteten Reifen erzeugt werden. Eine Produktion von weiteren fehlerbehafteten Reifen kann vermieden werden.

Unter Reifenaufbaufehler werden Fehler verstanden, die während des Reifenaufbaus erzeugt werden, beispielsweise durch eine fehlerhaft aufgelegte oder aufgespulte Reifenkomponente. Reifenaufbaufehler verursachen eine fehlerhafte Geometrie des aufgebauten Reifens. Unter Aufspulen wird das Aufwickeln einer Reifenkomponente auf der Reifenbaumaschine verstanden. Auflegen ist das Heranführen und Anordnen einer Reifenkomponente an weiteren Reifenkomponenten oder der Reifenbautrommel, wie es beispielsweise bei Kernprofilen und Kernen üblich ist.

Aufspulen und Auflegen von Reifenbaukomponenten umfasst bevorzugt ein positioniertes Setzen der Reifenbaukomponenten. Ein Anrollen mit einem Anroller umfasst bevorzugt auch das Fixieren von Reifenkomponenten.

Unter den Sensorwerten werden insbesondere die Messwerte zu der Position des Anrollers verstanden. Verarbeitete Sensorwerte ordnen beispielweise den einzelnen Messwerten Zeitpunkte oder Positionen auf einer Bautrommel oder Zuführeinrichtungen oder Ähnlichem zu und ermöglichen somit Kennwerte zu bestimmen, die den zeitlichen oder örtlichen Verlauf der Messwerte beschreiben. Die ermittelten Kennwerte können wiederum gegen Referenzwerte verglichen und auf maximale Abweichung geprüft werden. Beispielhaft für verarbeitete Messwerte sind unter Anderem relative Abstände von Messwerten zueinander oder Frequenzen im Verlauf der Messwerte zu nennen.

Eine bevorzugte Ausführungsform sieht vor, dass die Reifenkomponenten eine Innenschicht, eine Kordeinlage, eine Seitenwand, ein Kernprofil, einen Kern und ein Gürtelpaket aufweist und insbesondere eine Karkasse ist. Insbesondere durch eine der genannten Reifenkomponenten erzeugter fehlerbehafteter Aufbau des Reifens führt zum Ausschuss von Reifen.

Eine weitere bevorzugte Ausführungsform sieht vor, dass die Referenzwerte unter Berücksichtigung von Imperfektionen der Reifenbaumaschine bestimmt wird. Eine Berücksichtigung von Abweichungen der Reifenbaumaschine von ihrer idealen Geometrie ermöglicht eine genauere Betrachtung der Abweichungen der Reifungsbaukomponenten von ihrer idealen Geometrie, da sich die Abweichungen im weiteren Sinne aufsummieren.

Eine weitere bevorzugte Ausführungsform sieht vor, dass Wickelfehler, die an der Reifenbaumaschine erzeugt werden, insbesondere an der Karkasse und beziehungsweise oder an dem Gürtelpaket und beziehungsweise oder den Spleißen, vermessen werden. Insbesondere Wickelfehler und fehlerbehaftete Spleiße, die an der Reifenbaumaschine erzeugt werden, führen zu erhöhtem Ausschuss in Reifenproduktion. Weiterhin führen derartige Fehler im Reifenaufbau im Betrieb des Reifens zu unerwünschten Ausfällen.

Eine weitere bevorzugte Ausführungsform sieht vor, dass die Ausrichtung und Positionierung des Kerns und beziehungsweise oder des Kernprofils zur weiteren Karkasse, insbesondere der Kordeinlage, bestimmt wird. Die Ausrichtung des Kerns oder des Kernprofils zur weiteren Karkasse hat auf den Rundlauf des Reifens eine besonders hohe Auswirkung, so dass ein Bestimmen der Ausrichtung und Positionierung des Kerns oder des Kernprofils zur weiteren Karkasse besonders relevant ist.

Eine weitere bevorzugte Ausführungsform sieht vor, dass das Bestimmen der Position des Anrollers mit einer Frequenz von zumindest 50 Hz, bevorzugt von zumindest 500 Hz und weiter bevorzugt von zumindest 3000 Hz und einer Genauigkeit von zumindest 1 mm, bevorzugt von zumindest 0,1 mm und weiter bevorzugt von zumindest 0,02 mm in radialer Richtung und bevorzugt in axialer Richtung durchgeführt wird. Das Bestimmen der Position des Anrollers mit einer Frequenz von zumindest 500 Hz und einer Genauigkeit von zumindest 0,1 mm ermöglicht das Bestimmen von relevanten Reifenbaufehlern während des Anrollvorgangs der Reifenkomponenten, ohne dass der Reifenbauprozess aufgrund des Messverfahrens mit verringerter Geschwindigkeit durchgeführt werden muss. Vorteilhafterweise kann auch die Position in axialer Richtung ermittelt werden, so dass Reifenbaufehler mit Auswirkungen in axialer Richtung erfasst werden können.

Eine weitere bevorzugte Ausführungsform sieht vor, dass die Rotationsgeschwindigkeit einer Reifenbautrommel angepasst werden kann, um Messfehler zu ermitteln. Bei hohen Rotationsgeschwindigkeiten können Anroller kurzzeitig den Kontakt zu der Reifenbautrommel beziehungsweise zu den auf der Reifenbautrommel befindlichen Reifenkomponente verlieren, wodurch Messfehler entstehen. Durch ein Verringern der Rotationsgeschwindigkeit und einem wiederholten Abrollen des Anrollers auf dem gleichen Umfang kann ein derartiger Messfehler ermittelt werden.

Erfindungsgemäß ist eine Reifenbaumaschine mit einer Reifenbautrommel, einer Anrollvorrichtung, einer Recheneinheit und einem Sensor vorgesehen, wobei der Sensor mit der Recheneinheit zum Durchführen eines Verfahrens nach einem der vorhergehenden Ansprüche eingerichtet ist. Reifenbaufehler können somit in einfacher Weise direkt an der Reifenbaumaschine detektiert werden. Die fehlerbehafteten Reifen können direkt einem Recycling zugeführt werden, ohne dass weitere Herstell- und Lagerkosten für den fehlerbehafteten Reifen erzeugt werden. Eine Produktion von weiteren fehlerbehafteten Reifen kann vermieden werden.

Es ist die Verwendung einer Recheneinheit und eines Sensor an Anrollern an einer erfindungsgemäßen Reifenbaumaschine vorgesehen zum Ermitteln von Reifenaufbaufehlern an der Reifenbaumaschine. Durch die Verwendung wird eine kosteneffiziente und zuverlässige Ermittlung von Reifenbaufehlern ermöglicht.

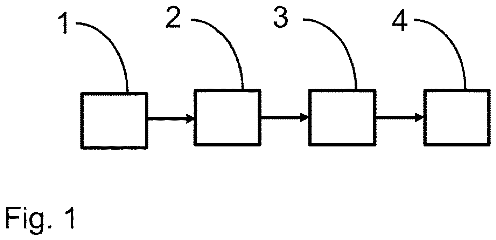

Die Erfindung lässt zahlreiche Ausführungsformen zu. Zur weiteren Verdeutlichung ihres Grundprinzips ist eines davon in der Zeichnungen dargestellt und wird nachfolgend beschrieben. Dieses zeigt in
Fig. 1 ein Verfahren zum Ermitteln von Reifenaufbaufehlern.

Figur 1 zeigt ein Verfahren zum Ermitteln von Reifenaufbaufehlern in dem in einem ersten Schritt 1 aufgespulte und aufgelegte Reifenkomponenten mit einem Anroller einer Anrollvorrichtung angerollt werden. Hierbei wird über einen Sensor in Form eines Winkelsensors die radiale Position des Anrollers zur Reifenbautrommel sowie mit einem weiteren Sensor, der als ein Wegsensor realisiert ist, die axiale Position des Anrollers zur Reifenbautrommel gemessen. Die Messignale werden in einem zweiten Schritt 2 an eine Recheneinheit übermittelt, die die Position des Anrollers während des Anrollvorgangs bestimmt und eine Differenz zwischen den bestimmten Positionen und den Referenzpositionen ermittelt. Die Recheneinheit überprüft in einem dritten Schritt 3, ob die Differenz in einem Toleranzbereich liegt. Ist dies gegeben, wird kein Signal ausgegeben. Ist die Differenz außerhalb des Toleranzbereichs, wird in einem vierten Schritt 4 ein Signal ausgegeben, um einen fehlerbehafteten Verfahrensschritt anzuzeigen.

### Bezugszeichenliste

- 1: erste Schritt
- 2: zweite Schritt
- 3: dritte Schritt
- 4: vierte Schritt

## Patentansprüche

1. Verfahren zum Ermitteln von Reifenaufbaufehlern an einer Reifenbaumaschine, wobei mit der Reifenbaumaschine Reifenkomponenten aufgespult und/oder aufgelegt werden, wobei die aufgespulten und/oder aufgelegten Reifenkomponenten mit einem Anroller einer Anrollvorrichtung angerollt werden,
**dadurch gekennzeichnet, dass**
die radiale und/oder axiale Positionen des Anrollers mit einem Sensor bestimmt werden, wobei aus den bestimmten radialen und/oder axialen Positionen des Anrollers Sensorwerte und/oder verarbeitete Sensorwerte erzeugt werden und mit Referenzwerten verglichen werden, wobei beim Überschreiten einer Differenz zwischen den Sensorwerten und/oder verarbeiteten Sensorwerten und den Referenzwerten ein Signal ausgegeben wird.

2. Verfahren nach Anspruch 1, **dadurch gekennzeichnet, dass** die Reifenkomponenten eine Innenschicht, eine Kordeinlage, eine Seitenwand, ein Kernprofil, einen Kern und ein Gürtelpaket aufweist und insbesondere eine Karkasse ist.

3. Verfahren nach den Ansprüchen 1 oder 2, **dadurch gekennzeichnet, dass** die Referenzwerte unter Berücksichtigung von Imperfektionen der Reifenbaumaschine bestimmt werden.

4. Verfahren nach einem der vorangehenden Ansprüche, **dadurch gekennzeichnet, dass** Wickelfehler, die an der Reifenbaumaschine erzeugt werden, insbesondere an der Karkasse und/oder an dem Gürtelpaket und/oder den Spleißen, vermessen werden.

5. Verfahren nach einem der vorangehenden Ansprüche, **dadurch gekennzeichnet, dass** die Ausrichtung und Positionierung des Kerns und/oder des Kernprofils zur weiteren Karkasse, insbesondere der Kordeinlage, bestimmt wird.

6. Verfahren nach einem der vorangehenden Ansprüche, **dadurch gekennzeichnet, dass** das Bestimmen der Position des Anrollers mit einer Frequenz von zumindest 50 Hz, bevorzugt von zumindest 500 Hz und weiter bevorzugt von zumindest 3000 Hz und einer Genauigkeit von zumindest 1 mm, bevorzugt von zumindest 0,1 mm und weiter bevorzugt von zumindest 0,02 mm in radialer Richtung und bevorzugt in axialer Richtung durchgeführt wird.

7. Verfahren nach einem der vorangehenden Ansprüche, **dadurch gekennzeichnet, dass** die Rotationsgeschwindigkeit einer Reifenbautrommel angepasst werden kann, um Messfehler zu ermitteln.

8. Reifenbaumaschine mit einer Reifenbautrommel, einer Anrollvorrichtung, einer Recheneinheit und einem Sensor, wobei der Sensor mit der Recheneinheit zum Durchführen eines Verfahrens nach einem der vorhergehenden Ansprüche eingerichtet ist.

9. Verwendung einer Recheneinheit und eines Sensor an Anrollern an einer Reifenbaumaschine nach Anspruch 8 zum Ermitteln von Reifenaufbaufehlern an der Reifenbaumaschine.
